# FASCICULE DE BREVET EUROPEEN

(11) **EP 2 268 478 B1**
(45) Date de publication et mention de la délivrance du brevet: **29.08.2012**
(21) Numéro de dépôt: 09733644.0
(22) Date de dépôt: 01.04.2009
(51) Int. Cl.: B29D 30/38, B29D 30/42, B29C 70/88

(54) **NAPPES DE FILS COMPORTANT DES ZONES CONDUCTRICES DE L'ELECTRICITE**
DRAHTSCHICHT MIT ELEKTRISCH LEITENDEN BEREICHEN
WIRE PLY COMPRISING ELECTROCONDUCTIVE AREAS

(30) Priorité: 16.04.2008 FR 0852556
(43) Date de publication de la demande: 05.01.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: QUERAUD, Hervé, F-63040 Clermont-ferrand Cedex 9 (FR); HINC, Henri, F-63540 Romagnat (FR)
(74) Mandataire: Reynaud, Georges
(86) Numéro de dépôt international: PCT/EP2009/002363
(87) Numéro de publication internationale: WO 2009/127323

(56) Documents cités:
- EP-A- 1 510 331
- DE-A1-102006 014 142
- US-A1- 2007 023 146

## Description

Le domaine de l'invention concerne les pneumatiques destinés à être montés sur des véhicules de transport. Plus spécifiquement, l'invention traite du problème de l'écoulement des charges électriques dans des pneumatiques réalisés avec des mélanges caoutchouteux non conducteurs de l'électricité.

Dans le but d'améliorer la résistance au roulement et de réduire la consommation de carburant, les pneumatiques modernes comportent des mélanges caoutchoutiques comprenant à titre de charge majoritaire des charges non conductrices de l'électricité, telles que la silice, ou encore des mélanges très faiblement chargés en noir de carbone, et qui sont utilisés par exemple pour la réalisation des bandes de roulement. Un pneumatique de ce type est décrit, à titre illustratif, dans la publication EP 0 501 227.

En raison de la très grande résistivité de ces mélanges, leur mise en oeuvre a été accompagnée par le développement de multiples solutions techniques pour éviter l'accumulation d'électricité statique, et permettre l'écoulement des charges vers le sol lors du roulage du véhicule. Les inconvénients liés à l'accumulation de charges électriques sont bien connus des fabricants, et sont de natures aussi diverses que la perturbation du fonctionnement de la radio embarquée dans le véhicule, les chocs électriques de l'occupant lors de sa descente du véhicule, ou encore le vieillissement accéléré du pneumatique en raison de la formation d'ozone.

La publication US 5 518 055 décrit un pneumatique dont la bande de roulement, réalisée à partir d'un mélange non conducteur, est enduite d'une fine couche de mélange conducteur. Cette couche est en contact avec les mélanges de flanc eux-mêmes également conducteurs de l'électricité afin de permettre l'écoulement des charges électriques.

Une autre solution, exposée dans la publication EP 0 658 452, consiste à placer un insert dans la bande de roulement. Cet insert, qui s'étend radialement préférentiellement sur toute la circonférence du pneumatique, est réalisé avec un mélange caoutchoutique conducteur de l'électricité, et relie la surface externe de la bande de roulement, soit à l'une des nappes de renfort sommet, soit à l'armature de carcasse, soit à tout autre partie attenante à la bande de roulement du pneumatique et suffisamment conductrice d'électricité, chacune de ces nappes étant conductrices de l'électricité. De nombreux perfectionnements ont été apportés à ce principe, selon que la bande de roulement comporte une ou plusieurs couches de matériaux conducteurs ou non conducteurs, et sont exposés à titre d'exemple dans les publications EP 0 925 903 ou EP 0 963 302.

Toutes ces méthodes ont pour objet de relier la surface externe de la bande de roulement avec une partie de la zone interne du sommet du pneumatique qui lui est juste adjacente, telle que le flanc, une nappe de renfort sommet ou de renfort carcasse, et qui présente des propriétés de conduction de l'électricité.

Toutefois, les développements récents des pneumatiques, toujours dans le but d'améliorer la résistance au roulement, conduisent à généraliser l'utilisation des mélanges faiblement conducteurs de l'électricité, à base de silice, dans la plupart des composants du pneumatique susceptibles d'effectuer un travail mécanique pendant la phase de roulage dudit pneumatique. Ainsi, en plus des bandes de roulement, on utilise de tels mélanges pour la réalisation des flancs, des nappes de renfort carcasse, des nappes d'armature sommet, ou encore des profilés de renfort sommet.

Seuls les éléments du pneumatique tels que l'anneau de renforcement du bourrelet, ou les gommes de protection talon, qui ont pour fonction d'assurer le contact entre la jante et la zone basse de l'enveloppe, sont réalisés avec des mélanges contenant une charge à base de carbone et présentent encore la propriété de conduire l'électricité.

L'invention a pour objet de fournir une solution à la conduction des charges électriques dans des pneumatiques essentiellement réalisés à partir de mélanges caoutchoutiques faiblement ou très faiblement conducteurs de l'électricité.

On entend par matériau caoutchoutique faiblement conducteur de l'électricité, un matériau à base de caoutchouc présentant une résistivité supérieure ou égale à 10⁸ Ohms/cm. De même, on entend par matériau caoutchoutique conducteur de l'électricité, un matériau à base de caoutchouc présentant une résistivité inférieure à 10⁶ Ohms/cm.

Ainsi, à titre général, l'invention concerne un bandage, destiné à être monté sur une roue, et spécialement conçu pour réduire la résistance au roulement. Ledit bandage comprend à titre indicatif :
- Une bande de roulement dont la surface radialement externe est destinée à être en contact avec le sol, ladite bande de roulement est, en règle générale, composée d'un mélange faiblement conducteur de l'électricité et comporte un moyen permettant d'assurer la conduction de l'électricité tel que décrit par exemple dans la publication EP 0 658 452.
- Une ceinture de renfort sommet, formée d'une pluralité de nappes de renforts superposées les unes sur les autres, chaque nappe de renfort comprenant des fils, parallèles entre eux, enrobés dans un mélange caoutchoutique faiblement conducteur de l'électricité, et faisant un angle donné avec la direction circonférentielle. La ceinture de renfort sommet est en contact avec la surface radialement interne de la bande de roulement, et plus particulièrement avec le moyen permettant d'assurer la conduction de l'électricité disposé dans la bande de roulement.
- Une zone talon, destinée à assurer un contact étroit entre la roue et le pneumatique, comprenant des anneaux de renfort des bourrelets et, des gommes de protection talon en contact avec la roue, lesdites gommes de protection talon étant formées, en règle générale, à partir d'un mélange caouchoutique conducteur de l'électricité.
- Une ou plusieurs nappes de renfort carcasse, superposées les unes sur les autres, ancrées par leurs extrémités radialement interne sur les anneaux de renfort des bourrelets, et comprenant également des fils enrobés dans un mélange caoutchoutique faiblement conducteur de l'électricité, parallèles entre eux et faisant un angle donné, généralement de 90°, avec la direction circonférentielle. En son centre, la nappe de renfort carcasse est en contact avec une des nappes formant la ceinture de renfort sommet.
- Une zone flanc destinée à assurer la protection de la nappe de renfort carcasse, et formée, en règle générale, à partir d'un mélange caoutchoutique faiblement conducteur de l'électricité.

Le terme fil doit être compris dans un sens tout à fait général, englobant un mono filament, un multi filament, un câblé ou un retors ou un assemblage équivalent, et ceci, quelle que soit la matière textile ou métallique constituant le fil, ou le traitement qu'il pourrait subir, par exemple un gommage ou un traitement de surface, pour favoriser sa liaison intime avec du caoutchouc.

Le problème qui se pose alors dans le type de pneumatique décrit ci-dessus, consiste à assurer un chemin conducteur entre la bande de roulement et la jante, en raison du fait que les nappes de renfort n'assurent plus la conduction des charges électriques entre le sommet de l'enveloppe et la zone basse.

L'objet de l'invention est de fournir une solution à ce problème en proposant des nappes de renfort sommet et des nappes de renfort carcasse adaptées.

Les nappes de renfort, selon l'invention, sont formées par un ensemble de fils, majoritairement enrobés dans un mélange caoutchoutique faiblement conducteur de l'électricité, parallèles entre eux et faisant un angle donné avec la direction longitudinale de ladite nappe,

Ces nappes se caractérisent en ce que des fils dits « passants », enrobés dans une ou plusieurs couches de mélanges caoutchoutiques et dont la couche externe est formée par un mélange caoutchoutique conducteur de l'électricité, sont intercalés entre les fils enrobés dans le mélange caoutchoutique faiblement conducteur de l'électricité, selon un pas et un arrangement donné, de manière à former un ou plusieurs chemins conducteurs de l'électricité entre la partie supérieure et la partie inférieure de la nappe.

On observe alors, qu'en ajustant judicieusement le pas et la disposition des fils passants, on crée un ou plusieurs chemins conducteurs entre la partie interne de la bande de roulement et la zone basse, du fait des contacts successifs entre les fils passants situés sur les nappes de renfort de la ceinture sommet et les nappes de renfort carcasse superposées les unes sur les autres.

La présence d'un faible nombre de fils enrobés dans un mélange caoutchoutique conducteur de l'électricité ne modifie pas de manière sensible la performance globale du pneumatique en terme de résistance à l'avancement.

De plus, le mélange conducteur de l'électricité enrobant les fils des différentes nappes de renfort est choisit de manière judicieuse pour avoir sensiblement les mêmes performances mécaniques que le mélange faiblement conducteur de l'électricité enrobant les fils de ladite nappe.

L'invention concerne également les modes de réalisation préférentiels d'une nappe conforme à l'invention, ainsi qu'un pneumatique comprenant des nappes conformes à l'invention.

La description qui suit s'appuie sur les figures 1 à 10 dans lesquelles :
- les figures 1 et 2 représentent des vues schématiques de dessus de nappes de renfort conformes à l'invention,
- les figures 3, 4 et 5 représentent des vues en coupe d'un fil passant conforme à l'invention,
- la figure 6 représente une vue en coupe d'une bandelette de renfort passante conforme à l'invention,
- la figure 7 représente une vue en coupe d'une nappe de renfort dont la lisière est conforme à l'invention,
- la figure 8 représente une vue en écorché d'un pneumatique comprenant des nappes de renfort sommet et des nappes de renfort carcasse conformes à l'invention,
- la figure 9 représente une vue en coupe radiale dudit pneumatique,
- la figure 10 représente une vue schématique de dessus des nappes de renfort constituant la ceinture sommet disposées sur une nappe de renfort carcasse.

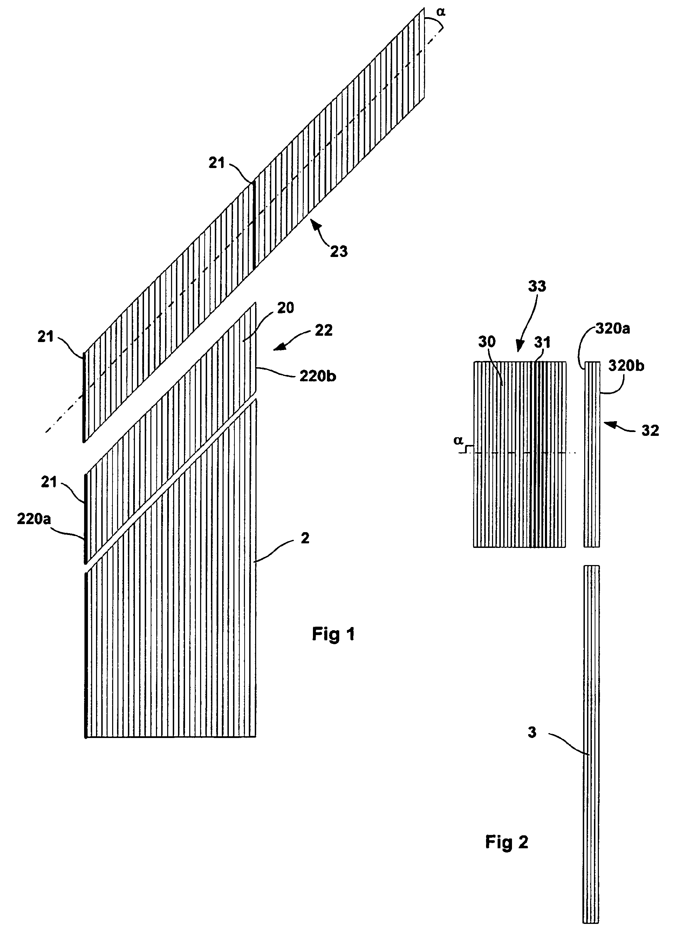

Les nappes de renfort 23 et 33 destinées à la fabrication d'un pneumatique, représentées dans les figures 1 et 2, sont formées de tronçons de fils, parallèles entre eux, qui font un angle (α) avec la direction longitudinale de la nappe. La nappe de renfort 23, représentée à la figure 1, dont les fils font un angle α, inférieur à 90°, avec la direction longitudinale, est préférentiellement destinée à être utilisée pour la réalisation d'une ceinture de renfort sommet. La nappe 33 représentée à la figure 2, dont les fils font un angle α avec la direction longitudinale sensiblement égal à 90°, est préférentiellement destinée à la réalisation d'une nappe de renfort carcasse.

Les fils (20, 30) sont majoritairement enrobés dans un mélange caoutchoutique faiblement conducteur de l'électricité. Des tronçons de fils passants (21, 31), sont intercalés entre les fils enrobés dans le mélange faiblement conducteur de l'électricité selon un pas et un arrangement donné.

La figure 1 illustre le cas dans lequel les tronçons de fils passants 21 sont disposés isolément entre plusieurs fils enrobés dans un mélange faiblement conducteur de l'électricité. La figure 2 illustre le cas dans lequel plusieurs fils passants 31, juxtaposés les uns aux autres, sont disposés entre plusieurs fils enrobés dans un mélange faiblement conducteur de l'électricité.

La réalisation des nappes de renfort comprend, de manière connue, les étapes suivantes. Par découpe, selon un angle α donné, on prélève des tronçons de nappes, plus communément désignés sous l'appellation de laizes (22, 32), dans une nappe dite droit fil (2, 3). Dans le cas d'espèce, la nappe droit fil est constituée de fils continus enrobés dans un mélange caoutchoutique faiblement conducteur de l'électricité, parallèles entre eux et faisant un angle nul avec la direction longitudinale de ladite nappe droit fil. Le nombre de fils juxtaposés dans une nappe droit fil peut varier selon la nature et le diamètre du fil d'une dizaine de fils (3), on parlera alors d'une bandelette, jusqu'à un ou deux milliers de fils, on a alors affaire à des nappes dites de grande largeur (2). Les lisières des laizes bordées par un fil (220a, 220b, 320a, 320b) sont alors aboutées les unes aux autres pour obtenir une bande continue de renfort (23, 33).

Un premier procédé d'obtention d'une nappe de renfort permettant de réaliser des nappes de renfort conformes à l'invention, pourrait consister à refendre une nappe droit fil de grande largeur pour former une pluralité de bandelettes droit fils, entre lesquelles seraient insérés des fils passants continus. Les ponts de gommes seraient reformés par aboutage des lisières les unes aux autres, et par adhésion des mélanges caoutchoutiques non vulcanisés sur eux-mêmes, de manière à obtenir une nappe droit fil contenant des fils passants.

Une alternative, plus facile à mettre en oeuvre, consiste plus simplement à intercaler, par aboutage des lisières desdites laizes bordées par un fil, un tronçon de fil passant (21) ou de bandelette passante (31) préalablement coupé à l'angle désiré, entre chacune des laizes prélevée dans une nappe droit fil (2, 3) dont les fils sont enrobés dans un mélange caoutchoutique faiblement conducteur de l'électricité. On obtient ainsi une bande continue de renfort (23, 33) conforme à l'invention.

On prélève ensuite des tronçons de longueur donnée dans ladite bande de renfort pour former une nappe de renfort destinée à être assemblée avec les autres composants caoutchoutiques formant l'ébauche du pneumatique.

De manière équivalente le fil passant ou la bandelette passante peuvent être ajoutés directement par bordage d'une des lisière de la nappe ou la bandelette droit fil.

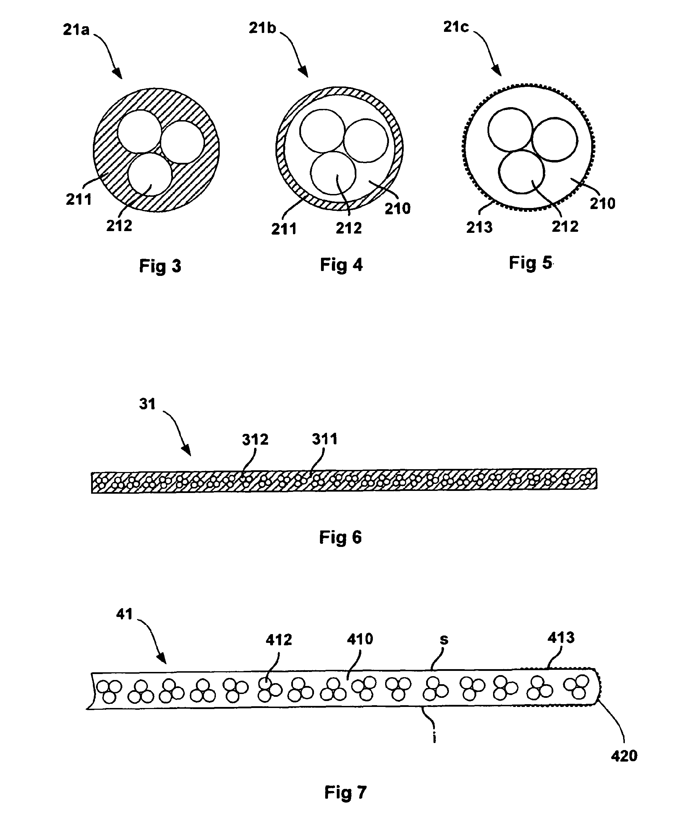

Le fil passant peut être obtenu par un procédé classique de gainage, en enrobant directement un fil 212 à l'aide d'un mélange conducteur de l'électricité 211 comme cela est illustré à la figure 3. Une première alternative consiste à enrober le fil 212 à l'aide d'un mélange faiblement conducteur de l'électricité 210 puis, à l'aide d'un procédé de gainage également connu, à coextruder une deuxième couche externe formée d'un mélange caoutchoutique conducteur de l'électricité 211, comme cela est illustré à la figure 4. Une seconde alternative consiste à déposer sur toute la surface d'un fil 212 enrobé dans un mélange caoutchoutique faiblement conducteur de l'électricité 210 une dissolution 213 formée d'un mélange caoutchoutique conducteur de l'électricité et d'un solvant, comme cela est illustré à la figure 5 où la dissolution 213 est représentée en pointillés. Le solvant est extrait par évaporation, et seule la fine couche de mélange caoutchoutique conducteur de l'électricité demeure à la surface externe du fil.

La bandelette passante 31 peut être obtenue de la même manière, de façon classique, en gainant une nappe de fils 312 comprenant quelques dizaines de fils avec un mélange caoutchoutique conducteur de l'électricité 311.

On observera qu'il est possible de reprendre les principes exposés ci-dessus et qui consistent à enduire, à l'aide d'une dissolution formée d'un solvant et d'un mélange conducteur de l'électricité (413), la lisière ainsi que les surfaces supérieures et inférieures connexes à ladite lisière, d'une nappe droit fil, d'une bandelette (41) ou d'une laize, dont les fils (412) sont enrobés dans un mélange (410) faiblement conducteur de l'électricité, pour obtenir les mêmes effets, comme cela est illustré à la figure 7. On établit ainsi un chemin conducteur ente la partie supérieure s et inférieure i de la nappe ou de la bandelette.

Les modes de réalisation des fils ou des bandelettes passantes ainsi que leur insertion dans une bande de renfort sont donnés ici à titre illustratif, et ne préjugent en rien de toute autre combinaison permettant d'aboutir à un résultat conforme à l'esprit de l'invention.

Les fils ou les bandelettes enrobés dans un mélange conducteur de l'électricité peuvent être disposées selon un pas régulier ou non. On s'arrangera néanmoins pour que, une fois disposées à leur place définitive dans le pneumatique, il existe un ou plusieurs contacts entre les fils passants ou les bandelettes passantes, de manière à former des chemins conducteurs entre la partie radialement externe de la ceinture sommet et la nappe de renfort carcasse.

Le nombre de fils passants dans une nappe peut être extrêmement faible. A titre expérimental il a été montré que la présence d'un seul fil passant par nappe suffisait à établir un chemin conducteur. Toutefois, à la pratique, il s'avère que ce type d'arrangement est d'une mise en oeuvre plus complexe car il convient alors, pendant la phase d'assemblage du pneumatique de disposer les nappes de sorte que les fils conducteurs soient superposés.

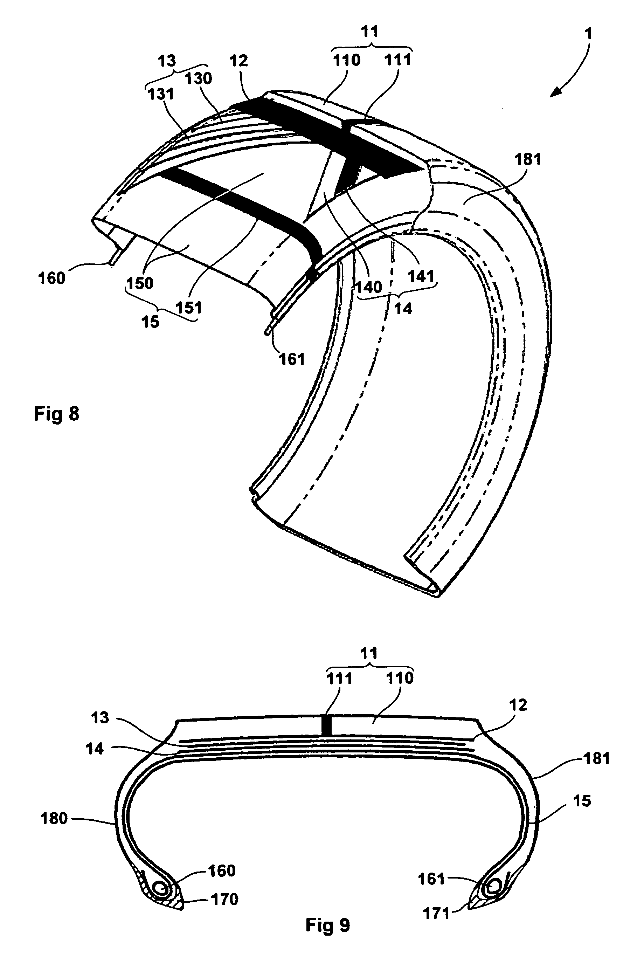

Le pneumatique 1, représenté à la figure 8 à titre d'illustration de l'invention, comporte une bande de roulement 11 comprenant des moyens pour assurer la conduction de l'électricité entre la surface extérieure de la bande de roulement destinée à être en contact avec le sol, et la partie radialement externe de la ceinture de renfort sommet.

Ces moyens peuvent consister à prévoir une bande de roulement réalisée avec un matériau caoutchoutique conducteur de l'électricité ou, préférentiellement, à réaliser une bande de roulement 11 formée à partir d'un mélange faiblement conducteur de l'électricité 110 et comprenant un insert 111 traversant radialement la bande de roulement. La bande de roulement 11 peut comprendre également une sous-couche 12, elle-même formée à partir d'un mélange conducteur de l'électricité ou comprenant un moyen d'écoulement des charges semblable à celui de la bande de roulement.

La ceinture de renfort sommet est composée de deux nappes de renfort 13 et 14 dont les fils forment un angle donné avec la direction circonférentielle de l'enveloppe pneumatique comme cela est représenté à sur la figure 8.

La nappe de renfort 13 est réalisée, à titre d'exemple, par juxtaposition de bandelettes 130 aboutées les unes aux autres, dont les fils sont enrobés dans un mélange faiblement conducteur de l'électricité, et dont une des lisières est formée par un fil passant 131 enrobé dans un mélange conducteur de l'électricité.

La nappe de renfort 14 est réalisée, selon un autre exemple d'assemblage, par aboutage de tronçons de bandelettes (140, 141). Une partie majoritaire des tronçons de bandelettes formant la nappe, est formée par des tronçons de bandelettes (140) dont les fils sont enrobés dans un mélange faiblement conducteur de l'électricité. Des tronçons de bandelettes passantes (141), sont intercalées entre les bandelettes (140) dont les fils sont enrobés dans un mélange faiblement conducteur de l'électricité.

La nappe de renfort carcasse 15 est formée, à titre d'illustration, par l'assemblage de laizes 150 formées de fils enrobés dans un mélange faiblement conducteur de l'électricité, entre lesquelles, au cours de l'étape de réalisation desdites laizes sur la machine de coupe de la nappe droit fil, a été insérée un tronçon de bandelette 151 formée de fils enrobés dans un mélange conducteur de l'électricité.

La nappe de renfort carcasse 15 est ancrée par ses deux extrémités radialement inférieure sur des anneaux de renfort talon 160 et 161.

Il va de soi que chacune des nappes de renfort, carcasse ou sommet, peut indistinctement être réalisée selon un des modes tels que décrit ci-dessus.

Une alternative à ces modes de réalisation concerne le cas dans lequel on dépose directement les fils à leur place finale sur l'ébauche de pneumatique. Ce procédé est décrit à titre d'exemple dans la publication EP 248 301 qui concerne un procédé de dépose des fils par projection, ou encore dans la publication EP 353 511 qui s'intéresse à un procédé de pose par déroulement d'un fil sur un noyau.

Ces procédés sont alimentés par une source de fil continu, préalablement enrobé dans un mélange caoutchoutique. Lorsque ce mélange est faiblement conducteur de l'électricité, il peut être judicieux de déposer sur la surface du fil, à intervalles réguliers, une couche superficielle d'un mélange conducteur de l'électricité. A titre d'exemple, on peut déposer une dissolution formée d'un mélange caoutchoutique conducteur de l'électricité et d'un solvant. Il suffit alors d'évaporer le solvant pour obtenir un fil dont certaines zones possèdent la propriété de conduire l'électricité.

Lors de la pose des fils à leurs places finales, on crée des tronçons de fils passants, dont le nombre dépend de la longueur de fil préalablement recouverte d'un mélange caoutchoutique conducteur de l'électricité, de sorte que la nappe de renfort ainsi formée possède les propriétés d'une nappe de renfort selon l'invention.

Le nombre et le type de nappes de renfort du pneumatique servant de support à la présente description ne sont pas limitatifs. Ainsi, il est possible, sans se départir de l'esprit de l'invention de réaliser une ceinture de renfort sommet comportant plus de deux nappes croisées, et une ou plusieurs nappes dites à zéro degré. De même, il est possible de réaliser un pneumatique comportant plusieurs nappes de renfort carcasse.

La figure 9 est une vue en coupe radiale du pneumatique 1, et permet de visualiser les gommes de protection talon 170 et 171, destinées à assurer le contact entre les talons du pneumatique et la jante de la roue. Ces gommes de protection talon sont en contact avec la nappe de renfort carcasse et comportent un moyen permettant de conduire l'électricité depuis la partie interne jusqu'à la partie externe en contact avec la jante de la roue. Préférentiellement ces gommes de protection talon sont réalisées avec un mélange caoutchoutique conducteur de l'électricité.

Enfin, le pneumatique 1, comprend des gommes de protection des flancs 180 et 181. Ces gommes de protection des flancs sont réalisées de manière préférentielle avec un mélange caoutchoutique faiblement conducteur de l'électricité.

En résumé, la bande de roulement 11 comprend des moyens (111, 12) permettant d'établir un chemin conducteur de l'électricité entre la partie radialement externe de la bande de roulement destinée à être en contact avec le sol et la partie radialement interne de ladite bande de roulement. La partie radialement externe de la ceinture de renfort sommet (13, 14) est en contact avec la partie radialement interne de la bande de roulement (12). Et la partie radialement interne de la ceinture de renfort sommet est en contact avec la nappe de renfort carcasse (15). Enfin, les parties radialement inférieures de la nappe de renfort carcasses sont en contact avec les gommes de protection talon (170, 171), ces dernières étant destinées à établir un contact étanche avec la jante de la roue.

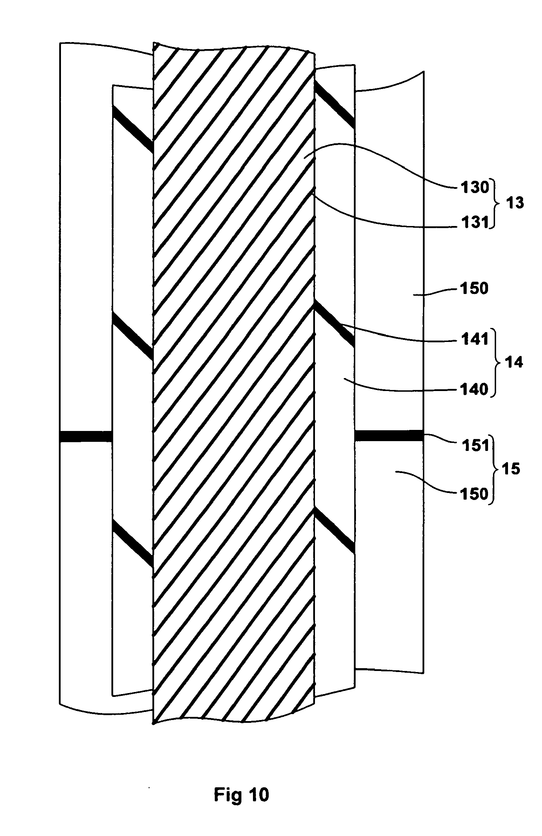

Par le biais des contact entre ces différents éléments, et plus particulièrement par les contacts entre les parties de nappes dont les fils sont enrobés dans un mélange conducteur de l'électricité, il s'établit au moins un chemin conducteur de l'électricité entre la surface radialement externe du pneumatique et la jante de la roue, comme cela est illustré schématiquement à la figure 10.

Les arrangements permettant d'obtenir un chemin conducteur peuvent être de natures différentes.

Selon une première configuration, les fils enrobés dans un mélange conducteur de l'électricité sont disposés dans la nappe de renfort en une ou plusieurs positions prédéfinies par rapport aux extrémités longitudinales de chacune des nappes. Les nappes sont posées les unes sur les autres en veillant à ce que les fils enrobés dans le mélange conducteur de l'électricité soient placés dans le pneumatique à un azimut prédéterminé. Le chemin conducteur entre les nappes est donc localisé de manière prédéfinie. Comme cela a été évoqué ci-dessus, cet arrangement peut présenter une complication lors de l'assemblage du pneumatique, mais il permet de réduire le nombre de fils passants, enrobés dans un mélange conducteur de l'électricité. Il permet également de traiter le cas particulier des pneumatiques comportant plusieurs nappes de renfort carcasse, dont les fils sont parallèles entre eux, et pour lesquels il est nécessaire de prévoir une ou plusieurs zones de recouvrement prédéfinies et suffisamment étendues dans la direction circonférentielle pour assurer un recouvrement des fils passants.

On observera néanmoins que la longueur de la laize doit être inférieure au développement de pose de la nappe lors de l'opération d'assemblage du pneumatique, de sorte que chaque pneumatique comportant une nappe de renfort réalisée conformément à ce procédé, puisse comporter au moins un fil passant ou une bandelette passante.

A l'opposé, selon une deuxième configuration, les nappes de renfort sont posées les une sur les autres sans qu'il soit porté une attention particulière à l'azimut dans le pneumatique des fils enrobés dans un mélange conducteur. Dans ce cas, le pas et la disposition des fils enrobés dans un mélange conducteur de l'électricité sont déterminés de manière à ce que, statistiquement, il puisse s'établir au moins un chemin conducteur entre les différentes nappes de renfort, quelle que soit la position circonférentielle des nappes les unes par rapport aux autres.

L'invention permet donc de réaliser, de manière simple, un pneumatique pourvu d'une bonne capacité d'élimination des charges électrostatiques du véhicule. De plus, les procédés de réalisation proposés pour la fabrication des dites nappes ne nécessitent pas de transformations majeures des procédés existant et peuvent être mis en oeuvre à moindre coût.

## Revendications

1. Nappe de renfort (13, 14, 15, 23, 33) destinée à la réalisation d'un pneumatique (1) formée par un ensemble de fils, majoritairement enrobés dans un mélange caoutchoutique faiblement conducteur de l'électricité (20, 30, 130, 140, 150, 210, 410) parallèles entre eux et faisant un angle donné (α) avec la direction longitudinale de ladite nappe,
**caractérisée en ce que** des fils passants (21, 31, 131, 141, 151), enrobés dans une ou plusieurs couches de mélanges caoutchoutiques et dont la couche externe (211, 213) est formée par un mélange caoutchoutique conducteur de l'électricité, sont intercalés entre les fils enrobés dans le mélange caoutchoutique faiblement conducteur de l'électricité (20, 30, 130, 140, 150) selon un pas et un arrangement donné, de manière à former un ou plusieurs chemins conducteurs de l'électricité entre la partie supérieure et la partie inférieure de la nappe.

2. Nappe de renfort selon la revendications 1 dans laquelle, lesdits fils enrobés dans un mélange caoutchoutique conducteur de l'électricité forment des sous ensembles (31, 141, 151) au sein desquels lesdits fils sont juxtaposés les uns à coté des autres, lesdits sous ensembles étant intercalés entre les fils enrobés dans le mélange caoutchoutique faiblement conducteur de l'électricité (140, 150) selon un pas et un arrangement donné.

3. Nappe de renfort selon l'une des revendications 1 ou 2 dans lequel les fils passant (21a), sont enrobés dans une seule couche de mélange caoutchoutique conducteur de l'électricité (211).

4. Nappe de renfort selon l'une des revendications 1 ou 2 dans lesquels les fils passant (21b, 21c) sont enrobés dans une première couche de mélange caoutchoutique faiblement conducteur de l'électricité (210) et par une couche externe d'un mélange caoutchoutique conducteur de l'électricité (211, 213).

5. Procédé de réalisation d'une nappe de renfort (13, 14, 15, 23, 33) destinée à la fabrication d'un pneumatique (1), ladite nappe étant formée par un ensemble de fils, majoritairement enrobés dans un mélange caoutchoutique faiblement conducteur de l'électricité (20, 30, 130, 140, 150, 210, 410), parallèles entre eux et faisant un angle (α) donné avec la direction longitudinale de ladite nappe,
**caractérisé en ce qu'**il comprend une étape au cours de laquelle on intercale des fils passants (21, 31), enrobés dans une ou plusieurs couches de mélanges caoutchoutiques, et dont la couche externe est formée par un mélange caoutchoutique conducteur de l'électricité, entre les fils enrobés dans le mélange caoutchoutique faiblement conducteur de l'électricité (20, 30, 130, 140, 150, 210, 410) selon un pas et un arrangement donné, de manière à former un ou plusieurs chemins conducteurs de l'électricité entre la partie supérieure (s) et la partie inférieure (i) de la nappe.

6. Procédé selon la revendication 5, comprenant les étapes dans lesquelles,
- dans une nappe droit fil dont les fils sont enrobés dans un mélange faiblement conducteur de l'électricité (2, 3), on prélève, selon un angle donné (α) par rapport à la direction longitudinale de la nappe droit fil, des tronçons d'une longueur déterminée pour former des laizes (22, 32),
- on juxtapose par aboutage le long d'une des lisières (220a) d'une laize selon un pas et un arrangement donné, un (21) ou plusieurs (31) tronçons de fils passants,
- on juxtapose, lesdites laizes (22, 32) par aboutage des lisières bordées par un fil (220, 220b, 320a, 320b) pour former une bande de renfort continue (23, 33).

7. Procédé selon la revendication 6, dans lequel, pour réaliser un fil passant (21a), on enrobe un fil (212) dans un mélange caoutchoutique conducteur de l'électricité (211).

8. Procédé selon la revendication 6, dans lequel, pour réaliser un fil passant (21b), on réalise un enrobage d'un fil (212) par coextrusion d'une première couche (210) formée d'un mélange caoutchoutique faiblement conducteur de l'électricité et d'une couche externe (211) formée d'un mélange caoutchoutique conducteur de l'électricité.

9. Procédé selon la revendication 6, dans lequel, pour réaliser un fil passant (21c):
- on enrobe un fil (210) dans un mélange faiblement conducteur de l'électricité (210),
- on dépose sur toute la surface du fil une dissolution (213) formée d'un mélange caoutchoutique conducteur de l'électricité et d'un solvant,
- on extrait le solvant par évaporation.

10. Procédé selon la revendication 5, comprenant les étapes dans lesquelles,
- dans une nappe droit fil dont les fils sont enrobés dans un mélange faiblement conducteur de l'électricité, on prélève, selon un angle donné (α) par rapport à la direction longitudinale de la nappe droit fil, des tronçons d'une longueur déterminée pour former des laizes,
- on dépose, selon un pas et un arrangement donné, sur une des lisières bordée par un fil (420) et sur les surfaces supérieure et inférieure connexes à ladite lisière d'une laize ou de la nappe droit fil, une dissolution (413) formée d'un mélange caoutchoutique conducteur de l'électricité et d'un solvant,
- on extrait le solvant
- on juxtapose, lesdites laizes par aboutage desdites lisières bordées par un fil,

11. Procédé selon la revendication 5 dans lequel
- on enrobe un fil continu (212) dans un mélange (210) faiblement conducteur de l'électricité,
- on dépose à intervalles déterminés sur la surface de toute la circonférence dudit fil, et sur une longueur de fil donnée, une couche superficielle d'un mélange caoutchoutique conducteur de l'électricité,
- on dépose directement à leur place finale lesdits tronçons de fils sur une surface de réception.

12. Procédé selon la revendication 11, dans lequel la fine couche superficielle de mélange caoutchoutique conducteur de l'électricité est obtenue par la dépose d'une dissolution à base d'un mélange caoutchoutique conducteur de l'électricité et d'un solvant que l'on extrait par évaporation.

13. Pneumatique (1) comprenant une ou plusieurs nappes de renfort carcasse (15) et une ceinture de renfort sommet formée par une ou plusieurs nappes de renfort sommet (13, 14),
**caractérisé en ce que** lesdites nappes (13, 14, 15) sont formées à partir de nappes de renfort selon l'une des revendications 1 à 4.

14. Pneumatique (1) selon la revendication 13, comprenant en outre une bande de roulement (11) dans laquelle sont prévus des moyens pour assurer la conduction de l'électricité entre la surface extérieure de la bande de roulement destinée à être en contact avec le sol, et la partie radialement externe de la ceinture de renfort sommet.

15. Pneumatique (1) selon la revendication 13 comprenant en outre deux zones talon où sont disposés des anneaux de renfort talon (160, 161) sur lesquels sont ancrés les extrémités radialement inférieures de la ou des nappes de renfort carcasse (15), et des gommes de protection talon (170, 171), destinées à entrer en contact avec la jante de la roue et placées de telle sorte qu'elles soient en contact avec au moins une des nappes de renfort carcasse (15), lesdites gommes de protection talon sont formées d'un matériau conducteur de l'électricité.

## Claims

1. Reinforcing ply (13, 14, 15, 23, 33) intended for the manufacture of a tyre (1) formed of an assembly of threads, mostly coated with a poorly electrically conducting rubber compound (20, 30, 130, 140, 150, 210, 410), parallel with each other and making a given angle (α) with the longitudinal direction of said ply,
which ply is **characterized in that** through-threads (21, 31, 131, 141, 151) coated with one or more layers of rubber compounds, of which the outer layer (211, 213) is formed of an electrically conducting rubber compound are inserted between the threads coated with the poorly electrically conducting rubber compound, (20, 30, 130, 140, 150) at a pitch and in a given arrangement in such a way as to form one or more electrically conducting pathways between the upper part and the lower part of the ply.

2. Reinforcing ply according to Claim 1, in which said threads coated with an electrically conducting rubber compound form subassemblies (31, 141, 151) within which said threads lie side by side with each other, said subassemblies being inserted between the threads coated with the poorly electrically conducting rubber compound (140, 150) at a pitch and in a given arrangement.

3. Reinforcing ply according to either of Claims 1 and 2, in which the through-threads (21a) are coated with a single layer of electrically conducting rubber compound (211).

4. Reinforcing ply according to either of Claims 1 and 2, in which the through-threads (21b, 21c) are coated with a first layer of poorly electrically conducting rubber compound (210) and an outer layer of an electrically conducting rubber compound (211, 213).

5. Method of making a reinforcing ply (13, 14, 15, 23, 33) intended for the manufacture of a tyre (1), said ply being formed of an assembly of threads, mostly coated with a poorly electrically conducting rubber compound (20, 30, 130, 140, 150, 210, 410), parallel with each other and making a given angle (α) with the longitudinal direction of said ply,
said method being **characterized in that** it includes a step during which through-threads (21, 31) coated with one or more layers of rubber compounds, their outer layer being formed of an electrically conducting rubber compound, are inserted between the threads coated with the poorly electrically conducting rubber compound (20, 30, 130, 140, 150, 210, 410) at a pitch and in a given arrangement, in such a way as to form one or more electrically conducting pathways between the upper part (s) and the lower part (i) of the ply.

6. Method according to Claim 5, comprising the steps in which:
- from a straight-thread ply in which the threads are coated with a poorly electrically conducting compound (2, 3), predetermined lengths are taken at a given angle (α) relative to the longitudinal direction of the straight-thread ply, to form lengths of plies (22, 32),
- one (21) or multiple (31) lengths of through-threads are spliced side by side along one of the selvedges (220a) of a length of ply at a pitch and in a given arrangement, and
- said lengths of plies (22, 32) are laid side by side by splicing selvedges bordered by a thread (220, 220b, 320a, 320b) to form an endless reinforcing band (23, 33).

7. Method according to Claim 6, in which, to make a through-thread (21a), a thread (212) is coated with an electrically conducting rubber compound (211).

8. Method according to Claim 6, in which, to make a through-thread (21b), coating of a thread (212) is performed by coextruding a first layer (210) formed of a poorly electrically conducting rubber compound and an outer layer (211) formed of an electrically conducting rubber compound.

9. Method according to Claim 6, in which, to make a through-thread (21c):
- a thread (210) is coated with a poorly electrically conducting compound (210),
- a rubber solution (213) formed of an electrically conducting rubber compound and a solvent is deposited over the whole of the surface of the thread, and
- the solvent is evaporated off.

10. Method according to Claim 5, comprising the steps in which:
- from a straight-thread ply in which the threads are coated with a poorly electrically conducting compound, predetermined lengths are taken at a given angle (α) relative to the longitudinal direction of the straight-thread ply, to form lengths of plies,
- a rubber solution (413) formed of an electrically conducting rubber compound and a solvent is deposited, at a pitch and in a given arrangement, on one of the selvedges bordered by a thread (420) and on the upper and lower surfaces connected to said selvedge of a length of ply or of the straight-thread ply,
- the solvent is removed,
- said lengths of plies are laid side by side by splicing said selvedges bordered by a thread.

11. Method according to Claim 5, in which:
- a continuous thread (212) is coated with a poorly electrically conducting compound (210),
- a surface layer of an electrically conducting rubber compound is deposited at defined intervals on the surface of the entire circumference of said thread, and along a given length of thread,
- said lengths of threads are deposited directly in a final position on a receiving surface.

12. Method according to Claim 11, in which the thin surface layer of electrically conducting rubber compound is produced by depositing a rubber solution based on a an electrically conducting rubber compound and a solvent which is evaporated off.

13. Tyre (1) comprising one or more carcass reinforcing plies (15) and a crown reinforcing belt formed of one or more crown reinforcing plies (13, 14),
said tyre being **characterized in that** said plies (13, 14, 15) are formed from reinforcing plies according to one of Claims 1 to 4.

14. Tyre (1) according to Claim 13, additionally comprising a tread (11) in which means are provided to conduct electricity between the outer surface of the tread, designed to be in contact with the ground, and the radially outer part of the crown reinforcing belt.

15. Tyre (1) according to Claim 13, additionally comprising two toe regions containing toe reinforcing rings (160, 161) to which the radially lower ends of the carcass reinforcing ply or plies (15) are anchored, and toe protection rubbers (170, 171) designed to be in contact with the wheel rim and positioned so that they are in contact with at least one of the carcass reinforcing plies (15), said toe protection rubbers being formed of an electrically conducting material.

## Patentansprüche

1. Verstärkungslage (13, 14, 15, 23, 33), die zur Herstellung eines Luftreifens (1) bestimmt ist und von einem Satz von Fasern gebildet wird, die überwiegend in eine elektrisch schwach leitende Kautschukmischung (20, 30, 130, 140, 150, 210, 410) eingebettet sind, zueinander parallel sind und einen vorgegebenen Winkel (α) mit der Längsrichtung der Verstärkungslage bilden,
**dadurch gekennzeichnet, dass** durchlaufende Fasern (21, 31, 131, 141, 151), die in eine oder mehrere Schichten von Kautschukmischungen eingebettet sind, von denen die äußere Schicht (211, 213) von einer elektrisch leitenden Kautschukmischung gebildet wird, zwischen den Fasern, die in die elektrisch schwach leitende Kautschukmischung (20, 30, 130, 140, 150) eingebettet sind, in einem bestimmten Abstand und einer bestimmten Anordnung angeordnet sind, derart, dass ein oder mehrere elektrisch leitende Pfade zwischen dem oberen Teil und dem unteren Teil der Verstärkungslage gebildet werden.

2. Verstärkungslage nach Anspruch 1, wobei die in eine elektrisch leitende Kautschukmischung eingebetteten Fasern Teilsätze (31, 141, 151) bilden, in denen diese Fasern nebeneinander angeordnet sind, wobei die Teilsätze zwischen den Fasern, die in die elektrisch schwach leitende Kautschukmischung (140, 150) eingebettet sind, in einem bestimmten Abstand und einer bestimmten Anordnung angeordnet sind.

3. Verstärkungslage nach einem der Ansprüche 1 oder 2, wobei die durchlaufenden Fasern (21a) in eine einzige Schicht einer elektrisch leitenden Kautschukmischung (211) eingebettet sind.

4. Verstärkungslage nach einem der Ansprüche 1 oder 2, wobei die durchlaufenden Fasern (21b, 21c) in eine erste Schicht einer elektrisch schwach leitenden Kautschukmischung (210) und eine äußere Schicht einer elektrisch leitenden Kautschukmischung (211, 213) eingebettet sind.

5. Verfahren zur Herstellung einer Verstärkungslage (13, 14, 15, 23, 33), die zur Herstellung eines Luftreifens (1) bestimmt ist, wobei die Verstärkungslage von einem Satz von Fasern gebildet wird, die überwiegend in eine elektrisch schwach leitende Kautschukmischung (20, 30, 130, 140, 150, 210, 410) eingebettet sind, zueinander parallel sind und einen vorgegebenen Winkel (α) mit der Längsrichtung der Verstärkungslage bilden,
**dadurch gekennzeichnet, dass** es einen Schritt aufweist, in dem durchlaufende Fasern (21, 31), die in eine oder mehrere Schichten von Kautschukmischungen eingebettet sind, von denen die äußere Schicht von einer elektrisch leitenden Kautschukmischung gebildet wird, zwischen den Fasern, die in die elektrisch schwach leitende Kautschukmischung (20, 30, 130, 140, 150, 210, 410) eingebettet sind, in einem bestimmten Abstand und einer bestimmten Anordnung angeordnet werden, derart, dass ein oder mehrere elektrisch leitende Pfade zwischen dem oberen Teil (s) und dem unteren Teil (i) der Verstärkungslage gebildet werden.

6. Verfahren nach Anspruch 5, welches die Schritte aufweist, in denen
- in einer faserparallelen Lage, deren Fasern in eine elektrisch schwach leitende Mischung (2, 3) eingebettet sind, unter einem vorgegebenen Winkel (α) bezüglich der Längsrichtung der faserparallelen Lage Abschnitte mit einer bestimmten Länge entnommen werden, um Bahnen (22, 32) zu bilden,
- durch Anfügen entlang einer der Kanten (220a) einer Bahn in einem bestimmten Abstand und einer bestimmten Anordnung ein (21) oder mehrere (31) Abschnitte von durchlaufenden Fasern nebeneinander angeordnet werden,
- die Bahnen (22, 32) durch Aneinanderfügen der von einer Faser (220, 220b, 320a, 320b) gesäumten Kanten nebeneinander angeordnet werden, um ein endloses Verstärkungsband (23, 33) zu bilden.

7. Verfahren nach Anspruch 6, wobei, um eine durchlaufende Faser (21a) herzustellen, eine Faser (212) in eine elektrisch leitende Kautschukmischung (211) eingebettet wird.

8. Verfahren nach Anspruch 6, wobei, um eine durchlaufende Faser (21b) herzustellen, eine Umhüllung einer Faser (212) durch Koextrusion einer ersten Schicht (210), die von einer elektrisch schwach leitenden Kautschukmischung gebildet wird, und einer äußeren Schicht (211), die von einer elektrisch leitenden Kautschukmischung gebildet wird, hergestellt wird.

9. Verfahren nach Anspruch 6, wobei, um eine durchlaufende Faser (21c) herzustellen:
- eine Faser (210) in eine elektrisch schwach leitende Mischung (210) eingebettet wird,
- auf die gesamte Oberfläche der Faser eine Lösung (213) aufgebracht wird, die von einer elektrisch leitenden Kautschukmischung und einem Lösungsmittel gebildet wird,
- das Lösungsmittel durch Verdampfung extrahiert wird.

10. Verfahren nach Anspruch 5, welches die Schritte aufweist, in denen
- in einer faserparallelen Lage, deren Fasern in eine elektrisch schwach leitende Mischung eingebettet sind, unter einem vorgegebenen Winkel (α) bezüglich der Längsrichtung der faserparallelen Lage Abschnitte mit einer bestimmten Länge entnommen werden, um Bahnen zu bilden,
- in einem bestimmten Abstand und einer bestimmten Anordnung auf eine der von einer Faser (420) gesäumten Kanten und auf die dieser Kante benachbarte Oberseite und Unterseite einer Bahn oder der faserparallelen Lage eine Lösung (413) aufgebracht wird, die von einer elektrisch leitenden Kautschukmischung und einem Lösungsmittel gebildet wird,
- das Lösungsmittel extrahiert wird,
- die Bahnen durch Aneinanderfügen der von einer Faser gesäumten Kanten nebeneinander angeordnet werden.

11. Verfahren nach Anspruch 5, wobei
- eine endlose Faser (212) in eine elektrisch schwach leitende Mischung (210) eingebettet wird,
- in bestimmten Abständen auf die Oberfläche des gesamten Umfangs der Faser und auf einer vorgegebenen Faserlänge eine Oberflächenschicht aus einer elektrisch leitenden Kautschukmischung aufgebracht wird,
- die Abschnitte von Fasern direkt an ihrer endgültigen Position auf eine Aufnahmefläche aufgebracht werden.

12. Verfahren nach Anspruch 11, wobei die dünne Oberflächenschicht aus einer elektrisch leitenden Kautschukmischung durch die Aufbringung einer Lösung auf der Basis einer elektrisch leitenden Kautschukmischung und eines Lösungsmittels, welches durch Verdampfung extrahiert wird, erhalten wird.

13. Luftreifen (1), welcher eine oder mehrere Karkassenverstärkungslagen (15) und einen Oberseiten-Verstärkungsgürtel, der von einer oder mehreren Oberseiten-Verstärkungslagen (13, 14) gebildet wird, aufweist,
**dadurch gekennzeichnet, dass** die Lagen (13, 14, 15) ausgehend von Verstärkungslagen nach einem der Ansprüche 1 bis 4 gebildet sind.

14. Luftreifen (1) nach Anspruch 13, welcher außerdem einen Laufstreifen (11) aufweist, in welchem Mittel vorgesehen sind, um die Leitung von Elektrizität zwischen der Außenfläche der Lauffläche, die dazu bestimmt ist, mit dem Boden in Kontakt zu kommen, und dem radial äußeren Teil des Oberseiten-Verstärkungsgürtels zu gewährleisten.

15. Luftreifen (1) nach Anspruch 13, welcher außerdem zwei Wulstbereiche, in denen Wulstverstärkungsringe (160, 161) angeordnet sind, an denen die radial unteren Enden der Karkassenverstärkungslage oder der Karkassenverstärkungslagen (15) verankert sind, und Wulstschutzgummis (170, 171), die dazu bestimmt sind, mit der Felge des Rades in Kontakt zu kommen, und derart angeordnet sind, dass sie sich mit mindestens einer der Karkassenverstärkungslagen (15) in Kontakt befinden, aufweist, wobei die Wulstschutzgummis aus einem elektrisch leitenden Material ausgebildet sind.
